# EUROPEAN PATENT SPECIFICATION

(11) **EP 3 663 563 B1**
(45) Date of publication and mention of the grant of the patent: **14.06.2023**
(21) Application number: 19214583.7
(22) Date of filing: 09.12.2019
(51) Int. Cl.: F02C 7/27

(54) **CASING WITH INTEGRAL CAVITY**
GEHÄUSE MIT INTEGRALEM HOHLRAUM
BOÎTIER À CAVITÉ INTÉGRÉE

(30) Priority: 07.12.2018 US 201816213047
(43) Date of publication of application: 10.06.2020
(73) Proprietor: Raytheon Technologies Corporation, Farmington, CT 06032 (US)
(72) Inventor: BINEK, Lawrence, Glastonbury, CT 06033 (US); BUTCHER, Evan, Suffield, CT 06078 (US); BOYER, Jesse R., Middletown, CT 06457 (US); SHARMA, OM P., South Windsor, CT 06074 (US); JAGDALE, Vijay Narayan, South Windsor, CT 06074 (US); DODS, Bryan G., Greer, SC 29651 (US)
(74) Representative: Dehns

(56) References cited:
- GB-A- 2 005 354
- US-A1- 2004 216 463
- US-A1- 2007 095 047
- US-B1- 6 941 760

## Description

### BACKGROUND

Attritable or expendable propulsion systems are designed for single-use or only a few uses, as compared to typical flight applications (e.g., commercial aircraft) that are used repeatedly over hundreds or thousands of cycles. For example, the propulsion systems may be used to power small, unmanned aircraft. Still, the propulsion systems must be reliable and occasionally must exhibit a minimal degree of maintainability.

The attritable or expendable propulsion systems include a starter which utilizes an oxygen-containing fluid to provide a spark. The starter can include multiple separate components and associated fittings, such as a pressure bottle for holding the oxygen-containing fluid.

US 6 941 760 B1 discloses a start system for an expendable gas turbine engine includes a pressurized oxygen source and a pyroflare igniter.

US 2007/095047 A1 discloses a fuel ignition system for jet engine starting containing pyrocartridges, connected by tubes to nozzles.

### SUMMARY

According to a first aspect a propulsion system as recited in claim 1 is provided.

Further, optional, features are recited in each of claims 2 to 7.

In an embodiment according to the foregoing embodiment, the wall includes an inner wall portion and an outer wall portion with respect to a central engine axis. The inner wall portion corresponds to the engine casing.

In a further embodiment according to any of the foregoing embodiments, the wall includes first and second curved side wall portions that join the inner wall portion and outer wall portion to one another.

In a further embodiment according to any of the foregoing embodiments, the cavity is elongated in a direction that is parallel to a central engine axis.

In a further embodiment according to any of the foregoing embodiments, at least a portion of the wall of the cavity borders a core flowpath of the core engine.

In a further embodiment according to any of the foregoing embodiments, the injector is in fluid communication with the diffuser ring via a manifold.

A method of operating a propulsion system according to an example of the present disclosure includes features as recited in claim 8.

In an embodiment according to the foregoing embodiment, the method of operating a propulsion system includes providing the pressurized gas from the cavity to the core engine.

In a further embodiment according to any of the foregoing embodiments, the method of operating a propulsion system includes charging the cavity with the pressurized gas prior to the starting step.

In a further embodiment according to any of the foregoing embodiments, the cavity is charged to a pressure of between about 10 and 500 psi (68.9 and 3447 kPa).

In a further embodiment according to any of the foregoing embodiments, the cavity is depleted of pressurized gas by the starting step, and the cavity subsequently serves as an air gap.

A method of making a component of a propulsion system according to an example of the present disclosure comprises features as recited in claim 12.

In a further embodiment according to any of the foregoing embodiments, the cavity has a long axis, and the long axis is generally parallel to a build direction in which the material is deposited.

In a further embodiment according to any of the foregoing embodiments, the cavity is oval-shaped.

In a further embodiment according to any of the foregoing embodiments, the cavity is teardrop shaped.

### BRIEF DESCRIPTION OF THE DRAWINGS

Figure 1 schematically shows an attritable/expendable propulsion system.
Figure 2A schematically shows an outer casing with integral injector assembly for the attritable/expendable propulsion system of Figure 1.
Figure 2B schematically shows an alternate outer casing with integral injector assembly for the attritable/expendable propulsion system of Figure 1.
Figure 3 schematically shows the injector assembly in fluid communication with the attritable/expendable propulsion system of Figure 1.
Figure 4 schematically shows an additive manufacturing tool.

### DETAILED DESCRIPTION

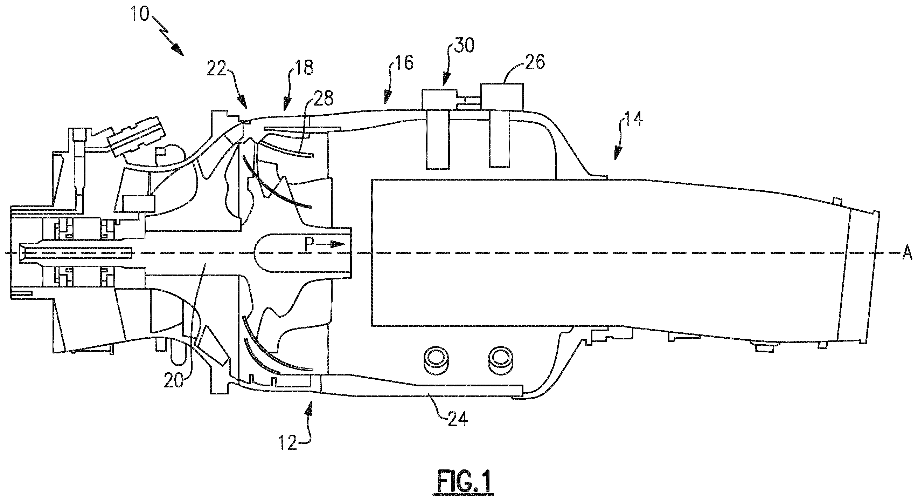

Figure 1 schematically shows an example attritable/expendable propulsion system 10. The propulsion system 10 can be used to power an attritable/expendable aircraft, such as a small unmanned aircraft. The propulsion system 10 is designed for single-use or limited-use, but meets the reliability and maintainability requirements for the particular application. As an example, an attritable/expendable propulsion system may have a design life of only a few hours, after which the mission has ended and the propulsion system is rendered inoperable and cannot be recovered/refurbi shed.

The propulsion system 10 includes a core engine 12, which includes a compressor 14, a combustor 16, and a turbine 18 arranged along a shaft 20, which is arranged along central engine axis A. In general, air is drawn into a core engine passage P and into compressor 14 for compression and communication into the combustor 16 and then expansion through the turbine 18. Air exists the turbine via turbine nozzle 22. An outer casing 24 surrounds the core engine 12.

The propulsion system 10 may include various accessories related to operation. The propulsion system 10 includes a starter 26 that is used to start up the propulsion system 10. The starter 26 starts the compressor 14 and/or turbine 18 by providing a pyrotechnic spark that ignites fuel, which creates exhaust gas that moves vanes 28 in the turbine and begins the turbine 18 rotation. Since the turbine 18 and compressor 14 are arranged on a common shaft 20, rotation of the turbine 18 facilitates start-up rotation of the compressor 14.

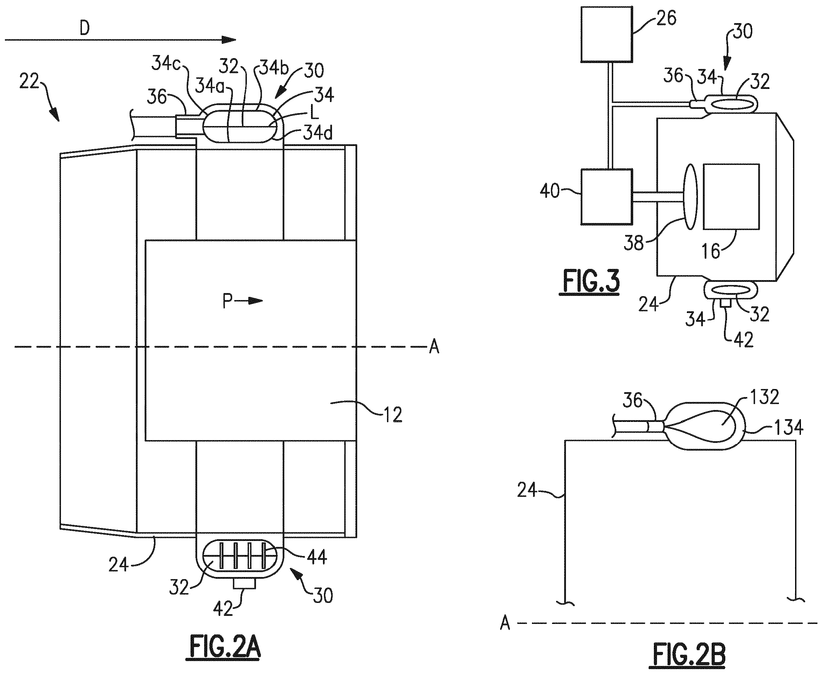

Figures 2 and 3 show selected portions of an injector assembly 30 for the starter 26. The injector assembly 30 also serves as an air gap, as will be discussed in more detail below. The injector assembly 30 provides air to the starter 26 which feeds the pyrotechnic spark.

In the example of Figure 2A, the injector assembly 30 is part of, or integral with, the outer casing 24 of the propulsion system 10 which surrounds the core engine 12..

The injector assembly 30 includes a cavity 32. The cavity 32 is defined by a wall 34. The wall 34 is integral with or unitary with the outer casing 24. The cavity 32 is annular and extends around the outer casing 24.

In the example of Figure 2A, the wall 34 comprises an inner wall portion 34a and an outer wall portion 34b with respect to the engine axis A. In this example, the inner wall 34b corresponds to the outer casing 24 and borders the core flowpath P. Side wall portions 34c, 34d join the inner wall portion 34a to the outer wall portion 34b to form an oval-shaped cavity. That is, the inner and outer wall portions 34a, 34b are generally parallel to one another and to the engine axis A and are joined by curved wall portions 34c, 34d.

The shape of the cavity 32 is generally configured to be fabricated by additive manufacturing, which is discussed in more detail below. In general the cavity 32 has a long axis L which is parallel to the central axis A of the propulsion system 10. Said another way, the cavity is elongated in a direction parallel to the central engine axis A.

Other shapes, such as teardrop shapes, are also contemplated by this disclosure. The teardrop shaped cavity would still be oriented such that a long axis of the teardrop shape is parallel to the central axis A. Figure 2B shows an example teardrop-shaped cavity 132 defined by wall 134.

The cavity 32 is configured to withstand high pressures, as discussed in more detail below. That is, the cavity 32 acts as a pressure vessel. The cavity 32 is free from intricate shapes, sharp corners, or other features that would facilitate the formation of super pressurized areas that can damage the integrity of the pressure vessel.

The cavity 32 is in fluid communication with the starter 26 via an injector 36. In some examples, as shown schematically in Figure 3, the cavity 32 is also in fluid communication with a diffuser ring 38 adjacent the core engine 12 via a manifold 40. In this example, the injector assembly 30 provides a pyrotechnic spark and/or air to both the starter 26 and the combustor 16 via the diffuser ring 38 during start-up of the propulsion system.

The cavity 32 also includes a fitting 42. The fitting 42 can be any known fitting that enables the cavity 32 to be fluidly connected to a fluid source for charging the cavity 32. The cavity 32 is charged with air (e.g., ambient air), oxygen, or another oxygen-containing fluid via the fitting 42 prior to start-up of the propulsion system 10. In one example, the cavity 32 is charged to a pressure of between about 10-500 psi (68.9 - 3447kPa). Accordingly, the cavity 32 is designed to withstand pressures of between about 100-500 psi (689 - 3447kPa) according to any known pressure vessel design features.

After start-up of the propulsion system 10, the cavity 32 is depleted from its initial charge. The cavity 32 serves as an air gap in the outer casing 24 which promotes cooling of the outer casing 24.

As discussed above, in this example, the injector assembly 30 is integral with the outer casing 24. Accordingly, the subsequent disclosure is related to manufacture of the outer casing 24 with injector assembly 30.

The outer casing 24 is manufactured by an additive manufacturing technique. Additive manufacturing involves building an article layer-by-layer from a powder material by consolidating selected portions of each successive layer of powder until the complete article is formed. For example, the powder is fed into a chamber, which may be under vacuum or inert cover gas. A machine deposits multiple layers of the powder onto one another. An energy beam, such as a laser, selectively heats and consolidates each layer with reference to a computer-aided design data to form solid structures that relate to a particular cross-section of the article. Other layers or portions of layers corresponding to negative features, such as cavities or openings, are not joined and thus remain as a powdered material. The unjoined powder material may later be removed using blown air, for example. With the layers built upon one another and joined to one another cross-section by cross-section, the article is produced. The article may be post-processed to provide desired structural characteristics. For example, the article may be heat treated to produce a desired microstructure. Additive manufacturing processes can include, but are not limited to, selective laser melting, direct metal laser sintering, electron beam melting, 3D printing, laser engineered net shaping, or laser powder forming. In this regard, the injector assembly 30 is seamless with regard to distinct boundaries that would otherwise be formed using techniques such as welding or brazing. Thus, the (monolithic) outer casing 24, in one example, is free of seams such that there are no distinct boundaries or discontinuities in the outer casing 24 that are visually or microscopically discernable.

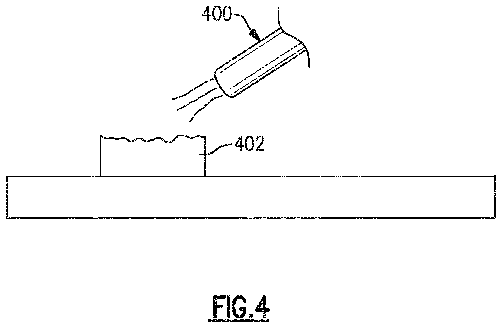

Figure 4 schematically shows an example additive manufacturing tool 400, such as a laser, which can print a component 402 by any of the additive manufacturing techniques described above or another additive manufacturing technique. In the example of Figure 4, the additive manufacturing tool 400 is printing the outer casing 24 described above, however, the additive manufacturing tool 400 can print any of the structures described herein.

Additive manufacturing of the outer casing 24 proceeds in a build direction D as shown in Figure 2A. In general, the build direction D is parallel to a long axis L of the cavity 32, which is most conducive to the additive manufacturing process and prevents caving-in of the cavity 32 during manufacture.

In some examples, a support structure 44 provides support for the cavity 32 during manufacture. That is, material is built up around the support structure with the tool 400 such that the cavity 32 is formed. In a particular example, the support structure 44 remains in the cavity 32 during operation of the propulsion system 10. Accordingly, the support structure does not interfere with the integrity of the cavity and its ability to withstand the required pressure as well as provide air to the starter 26 and/or combustor 16 as discussed above.

In some examples, the injector 36 has a diameter that enables removal of additive manufacturing residue/excess material after the additive manufacturing procedure.

Additive manufacturing of the outer casing 24 with integrated injector assembly 30 allows for unitizing of propulsion system 10 assemblies, integrates complex performance-enhancing features of the propulsion system 10 with one another, lowers production costs, and reduces manufacturing and assembly time/complexity. For example, integration of the cavity 32 eliminates the need for a separate pressure bottle and all of the associated fittings for the pressure bottle. These benefits are particularly important to attritable/expendable systems because of the low cost-target and assembly effort requirements.

The foregoing description shall be interpreted as illustrative and not in any limiting sense. A worker of ordinary skill in the art would understand that certain modifications could come within the scope of the invention as defined by the claims.

For these reasons, the following claims should be studied to determine the scope of the invention.

## Claims

1. A propulsion system (10), comprising:
a core engine (12);
a starter (26), the starter (26) configured to create a pyrotechnic spark which enables start-up rotation of a core engine (12); and
an outer casing (24) surrounding the core engine (12),
**characterised by** the outer casing (24) including an integral injector assembly (30) for the starter, the injector assembly (30) including a wall (34; 134) that defines a cavity (32; 132), and the wall (34; 134) being integral with the outer casing (24),
wherein the cavity is chargeable with a pressurized oxygen-containing fluid and provides pressurized oxygen-containing gas to the starter when starting the propulsion system.

2. The propulsion system (10) of claim 1, wherein the wall (34; 134) includes an inner wall portion (34a) and an outer wall portion (34b) with respect to a central engine axis (A), and the inner wall portion (34a) corresponds to the outer casing (24).

3. The propulsion system (10) of claim 2, wherein the wall (34; 134) further includes first and second curved side wall portions (34c, 34d) that join the inner wall portion (34a) and outer wall portion (34b) to one another.

4. The propulsion system (10) of claim 1, 2 or 3, wherein the cavity (32; 132) is elongated in a direction that is parallel to a central engine axis (A).

5. The propulsion system (10) of any preceding claim, wherein at least a portion of the wall (34; 134) of the cavity (32; 132) borders a core flowpath of the core engine (12).

6. The propulsion system (10) of any preceding claim, wherein the injector assembly (30) is in fluid communication with a diffuser ring (38) adjacent a combustor (16) in the core engine (12).

7. The propulsion system (10) of claim 6 wherein the injector assembly (30) is in fluid communication with the diffuser ring (38) via a manifold (40).

8. A method of operating a propulsion system (10), comprising:
starting a propulsion system (10) by providing pressurized oxygen-containing gas from a cavity (32; 132) to a starter (26), the starter (26) configured to create a pyrotechnic spark which enables start-up rotation of a core engine (12), wherein the cavity (32; 132) is chargeable with the pressurized oxygen containing fluid and is defined by a wall (34; 134),
wherein the propulsion system (10) comprises an outer casing (24) surrounding the core engine (12),
**characterised by** the outer casing (24) including an integral injector assembly (30) for the starter, the injector assembly (30) including the wall (34; 134), and the wall (34; 134) being integral with the outer casing (24) of the propulsion system (10).

9. The method of claim 8, further comprising providing the pressurized gas from the cavity (32; 132) to the core engine (12).

10. The method of claim 8 or 9, further comprising charging the cavity (32; 132) with the pressurized gas prior to the starting step, wherein, optionally, the cavity (32; 132) is charged to a pressure of between 10 and 500 psi (68.9 and 3447 kPa).

11. The method of claim 8, 9 or 10, wherein the cavity (32; 132) is depleted of pressurized gas by the starting step, and the cavity (32; 132) subsequently serves as an air gap.

12. A method of making the outer casing (24) with integrated injector assembly (30) of the propulsion system (10) according to any of claims 1 to 7, comprising:
depositing material using an additive manufacturing technique to form the outer casing (24) with integrated injector assembly (30), the integrated injector assembly (30) including a cavity (32; 132) defined by a wall (34; 134), the wall being integral with the outer casing (24), and the integrated injector (36) being in fluid communication with the cavity (32; 132).

13. The method of claim 12,
wherein the cavity (32; 132) has a longitudinal axis (L), generally parallel to a build direction (D) in which the material is deposited.

14. The propulsion system (10) or method of any preceding claim, wherein the cavity (32; 132) is oval shaped or teardrop shaped.

## Patentansprüche

1. Antriebssystem (10), umfassend:
ein Kerntriebwerk (12);
einen Anlasser (26), wobei der Anlasser (26) dazu konfiguriert ist, einen pyrotechnischen Funken zu erzeugen, der eine Anlassrotation eines Kerntriebwerks (12) ermöglicht; und
ein äußeres Gehäuse (24), das das Kerntriebwerk (12) umgibt, **dadurch gekennzeichnet, dass** das äußere Gehäuse (24) eine integrale Injektorbaugruppe (30) für den Anlasser beinhaltet, wobei die Injektorbaugruppe (30) eine Wand (34; 134) beinhaltet, die einen Hohlraum (32; 132) definiert, und die Wand (34; 134) mit dem äußeren Gehäuse (24) integral ist,
wobei der Hohlraum mit einem druckbeaufschlagten sauerstoffhaltigen Fluid beschickbar ist und dem Anlasser beim Anlassen des Antriebssystems druckbeaufschlagtes sauerstoffhaltiges Gas bereitstellt.

2. Antriebssystem (10) nach Anspruch 1, wobei die Wand (34; 134) einen inneren Wandabschnitt (34a) und einen äußeren Wandabschnitt (34b) in Bezug auf eine zentrale Triebwerksachse (A) beinhaltet und der innere Wandabschnitt (34a) dem äußeren Gehäuse (24) entspricht.

3. Antriebssystem (10) nach Anspruch 2, wobei die Wand (34; 134) ferner einen ersten und einen zweiten gekrümmten Seitenwandabschnitt (34c, 34d) beinhaltet, die den inneren Wandabschnitt (34a) und den äußeren Wandabschnitt (34b) miteinander verbinden.

4. Antriebssystem (10) nach Anspruch 1, 2 oder 3, wobei der Hohlraum (32; 132) in einer Richtung verlängert ist, die parallel zu einer zentralen Triebwerksachse (A) ist.

5. Antriebssystem (10) nach einem der vorhergehenden Ansprüche, wobei mindestens ein Abschnitt der Wand (34; 134) des Hohlraums (32; 132) an einen Kernströmungsweg des Kerntriebwerks (12) angrenzt.

6. Antriebssystem (10) nach einem der vorhergehenden Ansprüche, wobei die Injektorbaugruppe (30) in Fluidverbindung mit einem Diffusorring (38) benachbart zu einer Brennkammer (16) in dem Kerntriebwerk (12) steht.

7. Antriebssystem (10) nach Anspruch 6, wobei die Injektorbaugruppe (30) über einen Verteiler (40) in Fluidverbindung mit dem Diffusorring (38) steht.

8. Verfahren zum Betreiben eines Antriebssystems (10), umfassend:
Anlassen eines Antriebssystems (10) durch Bereitstellen von druckbeaufschlagtem sauerstoffhaltigem Gas aus einem Hohlraum (32; 132) für einen Anlasser (26), wobei der Anlasser (26) dazu konfiguriert ist, einen pyrotechnischen Funken zu erzeugen, der eine Anlassrotation eines Kerntriebwerks (12) ermöglicht, wobei der Hohlraum (32; 132) mit dem druckbeaufschlagten sauerstoffhaltigen Fluid beschickbar ist und durch eine Wand (34; 134) definiert ist,
wobei das Antriebssystem (10) ein äußeres Gehäuse (24) umfasst, das das Kerntriebwerk (12) umgibt,
**dadurch gekennzeichnet, dass** das äußere Gehäuse (24) eine integrale Injektorbaugruppe (30) für den Anlasser beinhaltet, wobei die Injektorbaugruppe (30) die Wand (34; 134) beinhaltet und die Wand (34; 134) mit dem äußeren Gehäuse (24) des Antriebssystems (10) integral ist.

9. Verfahren nach Anspruch 8, ferner umfassend Bereitstellen des druckbeaufschlagten Gases aus dem Hohlraum (32; 132) für das Kerntriebwerk (12).

10. Verfahren nach Anspruch 8 oder 9, ferner umfassend Beschicken des Hohlraums (32; 132) mit dem druckbeaufschlagten Gas vor dem Schritt des Anlassens, wobei optional der Hohlraum (32; 132) bis zu einem Druck zwischen 10 und 500 psi (68,9 und 3447 kPa) beschickt wird.

11. Verfahren nach Anspruch 8, 9 oder 10, wobei dem Hohlraum (32; 132) durch den Schritt des Anlassens das druckbeaufschlagte Gas entzogen wird und der Hohlraum (32; 132) anschließend als ein Luftspalt dient.

12. Verfahren zum Herstellen des äußeren Gehäuses (24) mit integrierter Injektorbaugruppe (30) des Antriebssystems (10) nach einem der Ansprüche 1 bis 7, umfassend:
Anordnen von Material unter Verwendung einer additiven Fertigungstechnik, um das äußere Gehäuse (24) mit integrierter Injektorbaugruppe (30) zu bilden, wobei die integrierte Injektorbaugruppe (30) einen Hohlraum (32; 132) beinhaltet, der durch eine Wand (34; 134) definiert ist, wobei die Wand integral mit dem äußeren Gehäuse (24) ist und der integrierte Injektor (36) in Fluidverbindung mit dem Hohlraum (32; 132) steht.

13. Verfahren nach Anspruch 12, wobei der Hohlraum (32; 132) eine Längsachse (L) aufweist, die im Allgemeinen parallel zu einer Aufbaurichtung (D) ist, in der das Material angeordnet wird.

14. Antriebssystem (10) oder Verfahren nach einem der vorhergehenden Ansprüche, wobei der Hohlraum (32; 132) ovalförmig oder tropfenförmig ist.

## Revendications

1. Système de propulsion (10), comprenant :
un moteur central (12) ;
un démarreur (26), le démarreur (26) étant configuré pour créer une étincelle pyrotechnique qui permet la rotation de démarrage d'un moteur central (12) ; et
un boîtier externe (24) entourant le moteur principal (12),
**caractérisé par** le boîtier externe (24) comportant un ensemble injecteur intégré (30) pour le démarreur, l'ensemble injecteur (30) comportant une paroi (34 ; 134) qui définit une cavité (32 ; 132), et la paroi (34 ; 134) étant solidaire du boîtier externe (24),
dans lequel la cavité peut être chargée avec un fluide contenant de l'oxygène sous pression et fournit un gaz contenant de l'oxygène sous pression au démarreur lors du démarrage du système de propulsion.

2. Système de propulsion (10) selon la revendication 1, dans lequel la paroi (34 ; 134) comporte une partie de paroi interne (34a) et une partie de paroi externe (34b) par rapport à un axe central de moteur (A), et la partie de paroi interne (34a) correspond au boîtier externe (24).

3. Système de propulsion (10) selon la revendication 2, dans lequel la paroi (34 ; 134) comporte en outre des première et seconde parties de paroi latérale incurvées (34c, 34d) qui joignent la partie de paroi interne (34a) et la partie de paroi externe (34b) l'une à l'autre.

4. Ensemble de propulsion (10) selon la revendication 1, 2 ou 3, dans lequel la cavité (32 ; 132) est allongée dans une direction qui est parallèle à un axe central de moteur (A).

5. Système de propulsion (10) selon une quelconque revendication précédente, dans lequel au moins une partie de la paroi (34 ; 134) de la cavité (32 ; 132) borde un chemin d'écoulement central du moteur central (12).

6. Système de propulsion (10) selon une quelconque revendication précédente, dans lequel l'ensemble injecteur (30) est en communication fluidique avec une bague de diffusion (38) adjacente à une chambre de combustion (16) dans le moteur principal (12).

7. Système de propulsion (10) selon la revendication 6, dans lequel l'ensemble injecteur (30) est en communication fluidique avec la bague de diffusion (38) via un collecteur (40).

8. Procédé de fonctionnement d'un système de propulsion (10), comprenant :
le démarrage d'un système de propulsion (10) en fournissant un gaz contenant de l'oxygène sous pression d'une cavité (32 ; 132) à un démarreur (26), le démarreur (26) étant configuré pour créer une étincelle pyrotechnique qui permet la rotation de démarrage d'un moteur principal (12), dans lequel la cavité (32 ; 132) peut être chargée avec le fluide contenant de l'oxygène sous pression et est définie par une paroi (34 ; 134), dans lequel le système de propulsion (10) comprend un boîtier externe (24) entourant le moteur principal (12),
**caractérisé par** le boîtier externe (24) comportant un ensemble injecteur intégré (30) pour le démarreur, l'ensemble injecteur (30) comportant la paroi (34 ; 134) et la paroi (34 ; 134) étant solidaire du boîtier externe (24) du système de propulsion (10).

9. Procédé selon la revendication 8, comprenant en outre la fourniture du gaz sous pression de la cavité (32 ; 132) au moteur central (12).

10. Procédé selon la revendication 8 ou 9, comprenant en outre le chargement de la cavité (32 ; 132) avec le gaz sous pression avant l'étape de démarrage, dans lequel, éventuellement, la cavité (32 ; 132) est chargée à une pression comprise entre 10 et 500 psi (68,9 et 3447 kPa).

11. Procédé selon la revendication 8, 9 ou 10, dans lequel la cavité (32 ; 132) est vidée de gaz sous pression par l'étape de démarrage, et la cavité (32 ; 132) sert ensuite d'entrefer.

12. Procédé de fabrication du boîtier externe (24) avec ensemble injecteur intégré (30) du système de propulsion (10) selon l'une quelconque des revendications 1 à 7, comprenant : le dépôt de matériau à l'aide d'une technique de fabrication additive pour former le boîtier externe (24) avec ensemble injecteur intégré (30), l'ensemble injecteur intégré (30) comportant une cavité (32 ; 132) définie par une paroi (34 ; 134), la paroi étant solidaire du boîtier externe (24), et l'injecteur intégré (36) étant en communication fluidique avec la cavité (32 ; 132).

13. Procédé selon la revendication 12, dans lequel la cavité (32 ; 132) a un axe longitudinal (L), généralement parallèle à une direction de construction (D) dans laquelle le matériau est déposé.

14. Système de propulsion (10) ou procédé selon une quelconque revendication précédente, dans lequel la cavité (32 ; 132) est de forme ovale ou en forme de larme.
